Europäisches Patentamt

European Patent Office

Office européen des brevets

(11) Veröffentlichungsnummer: **0 311 027**
**A2**

(12) **EUROPÄISCHE PATENTANMELDUNG**

(21) Anmeldenummer: 88116432.1

(22) Anmeldetag: 05.10.88

(51) Int. Cl.⁴: **G05D 16/10 , B60T 15/02**

(30) Priorität: 09.10.87 DE 3734105

(43) Veröffentlichungstag der Anmeldung:
**12.04.89 Patentblatt 89/15**

(84) Benannte Vertragsstaaten:
**BE DE FR GB IT NL SE**

(71) Anmelder: **Armaturenfabrik Hermann Voss GmbH & Co.**

**D-5272 Wipperfürth(DE)**

(72) Erfinder: **Scholz, Joachim H.**
**An der Ziegelei 14**
**D-7558 Bischweier(DE)**

(74) Vertreter: **Patentanwälte Dr. Solf & Zapf**
**Schlossbleiche 20 Postfach 13 01 13**
**D-5600 Wuppertal 1(DE)**

(54) **Kraftgesteuertes Druckregelventil mit geteiltem Ventilglied.**

(57) Die Erfindung betrifft ein kraftgesteuertes Druckregelventil, bestehend aus einem Gehäuse (1) mit mindestens einer Druckmitteleingangsöffnung (8), ei-ner Druckmittelausgangsöffnung (18) und einer Ent-lastungsöffnung (18a) sowie mit einer ständig mit der Druckmitteleingangsöffnung (8) verbundenen, gegen die Druckmittelausgangsöffnung (18) absperr-baren Gehäusekammer (7), in der ein als Hohlzylin-der ausgebildetes Ventilglied (2) axial verstellbar, radial spielarm geführt ist, dessen einer Rand eine mit der Druckmittelausgangsöffnung (18) verbunde-ne Öffnung umgibt und dessen anderer Rand mit einem achsgleich zur Entlastungsöffnung (18a) an-geordneten Ventilsitz zusammenwirkt und einen zweiten Ventilsitz in einem Deckel (5) des Ventilglie-des (2) umgibt, mit dem ein die Verstellkraft auf das Ventilglied (2) aufbringendes, innerhalb der Entla-stungsöffnung (18a) angeordnetes Stellglied mit ei-ner ringförmigen Kante zusammenwirkt und dieser Stellkraft eine von einem elastischen, die Gehäuse-kammer (7) gegen die Druckmittelausgangsöffnung (18) absperrenden, das Ventilglied (2) umfassenden Dichtring (10) erzeugte Rückstellkraft entgegenwirkt. Gemäß der Erfindung ist der das Ventilglied

2) bildende Hohlzylinder derart unterteilt, daß eine beidseitige Druckbeaufschlagung des Dichtrin-ges (10) vom Innenraum des Ventilgliedes (2) gege-ben ist.

FIG. 1

## Kraftgesteuertes Druckregelventil mit geteiltem Ventilglied

Die vorliegende Erfindung betrifft ein kraftgesteuertes Druckregelventil, bestehend aus einem Gehäuse mit mindestens einer Druckmitteleingangsöffnung, einer Druckmittelausgangsöffnung und einer Entlastungsöffnung sowie mit einer ständig mit der Druckmitteleingangsöffnung verbundenen, gegen die Druckmittelausgangsöffnung absperrbaren Gehäusekammer, in der ein als Hohlzylinder ausgebildetes Ventilglied axial verstellbar, radial spielarm geführt ist, dessen einer Rand eine mit der Druckmittelausgangsöffnung verbundene Öffnung umgibt und dessen anderer Rand mit einem achsgleich zur Entlastungsöffnung angeordneten Ventilsitz zusammenwirkt und einen zweiten Ventilsitz in einem Deckels des Ventilgliedes umgibt, mit dem ein die Verstellkraft auf das Ventilglied aufbringendes, innerhalb der Entlastungsöffnung angeordnetes Stellglied mit einer ringförmigen Kante zusammenwirkt und dieser Stellkraft eine von einem elastischen, die Gehäusekammer gegen die Druckmittelausgangsöffnung absperrenden, das Ventilglied umfassenden Dichtring erzeugte Rückstellkraft entgegenwirkt.

Ein derartiges Druckregelventil ist aus der DE-OS 33 40 525 bekannt. Hierbei ist der elastische Dichtring auf einem Bund der Gehäusekammer derart angeordnet, daß er einerseits gegen die Innenwandung der Gehäusekammer dichtend anliegt und andererseits gegen den Umfang des Ventilgliedes im Bereich einer Ringschulter desselben. Diese Anordnung kann bei schnellen Lastwechseln im Ventil, insbesondere bei Entlastung, dazu führen, daß der Dichtring aus seiner Lage in den Ringspalt zwischen dem Ventilglied oberhalb der Ringschulter und der Wandung der Gehäusekammer gedrückt wird. Hierdurch kann der Dichtring verklemmen, so daß die Funktionsfähigkeit des Ventiles beeinträchtigt wird. Auch kann es zu einer Beschädigung des Dichtringes kommen.

Der Erfindung liegt die Aufgabe zugrunde, das Druckregelventil der eingangs beschriebenen Art derart zu verbessern, daß der Dichtring durch die im Ventil auftretenden Druckbelastungen nicht aus seiner Lage herausgedrückt werden kann, so daß die vorstehenden Nachteile nicht auftreten können. Erfindungsgemäß wird dies dadurch erreicht, daß der das Ventilglied bildende Hohlzylinder derart unterteilt ist daß durch eine beidseitige Druckbeaufschlagung des Dichtringes vom Innenraum des Ventilgliedes her eine druckausgeglichene Lagerung des Dichtringes in bezug auf den im Hohlzylinder vorhandenen Druck gegeben ist. Durch diese erfindungsgemäße Ausgestaltung wird der Dichtring von beiden Seiten, d. h. von oben und unten, in jeder Schaltstellung des Ventiles von dem im Innern des Ventiles jeweils herrschenden Druck beaufschlagt, so daß in bezug auf diesen Druck eine druckneutrale Lagerung des Dichtringes gegeben ist. Es treten somit keine Kräfte auf, die den Dichtring aus seiner Lage heraus in den Ringraum zwischen Gehäusewandung und Ventilkörper pressen können. Ein Verklemmen des Dichtringes wird somit sicher verhindert.

Weitere vorteilhafte Ausführungsformen der Erfindung sind in den Unteransprüchen 2 bis 7 enthalten.

Anhand des in den beiliegenden Zeichnungen dargestellten Ausführungsbeispiels wird die Erfindung nunmehr näher erläutert. Es zeigen:

Fig. 1 ein erfindungsgemäßes Druckregelventil im Entlüftungszustand als Mittellängsschnitt,

Fig. 2 das Druckregelventil gemäß Fig. 1 jedoch im Belüftungszustand.

Das erfindungsgemäße kraftgesteuerte Druckregelventil ist zwischen einer Druckmittelquelle 9 für ein beliebiges, insbesondere jedoch pneumatisches Fluid, beispielsweise einem Drucklufttank und einem Verbraucher 19, beispielsweise dem Stellzylinder der Druckluftbremse eines Fahrzeuges angeordnet. Ein Ventilgehäuse 1 des Druckregelventiles weist einen Druckmitteleingang 8, einen ersten Druckmittelausgang 18 zum Verbraucher 19 und einen zweiten Druckmittelausgang 18 a zum Umgebungsmedium, beispielsweise zur Umgebungsluft auf.

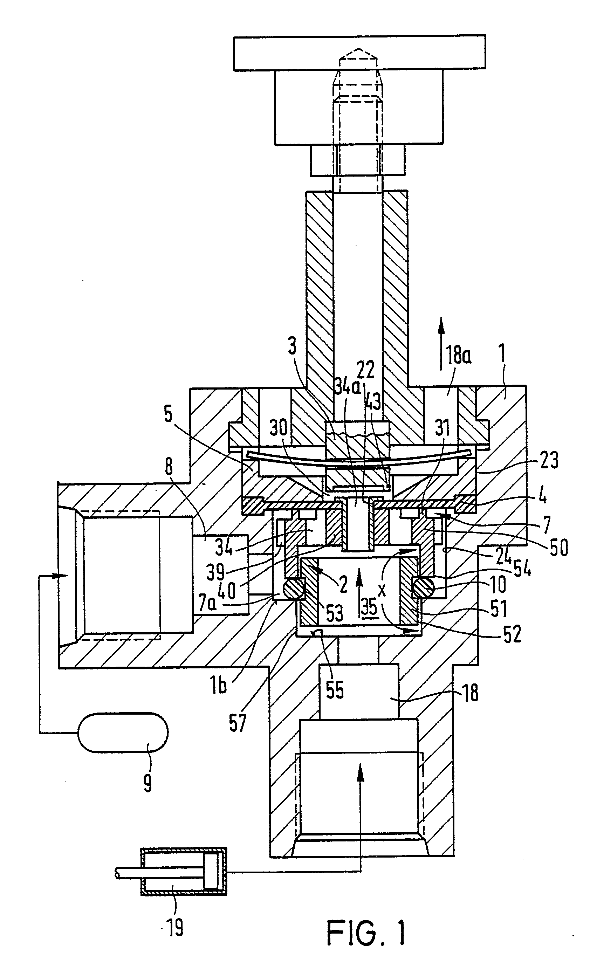

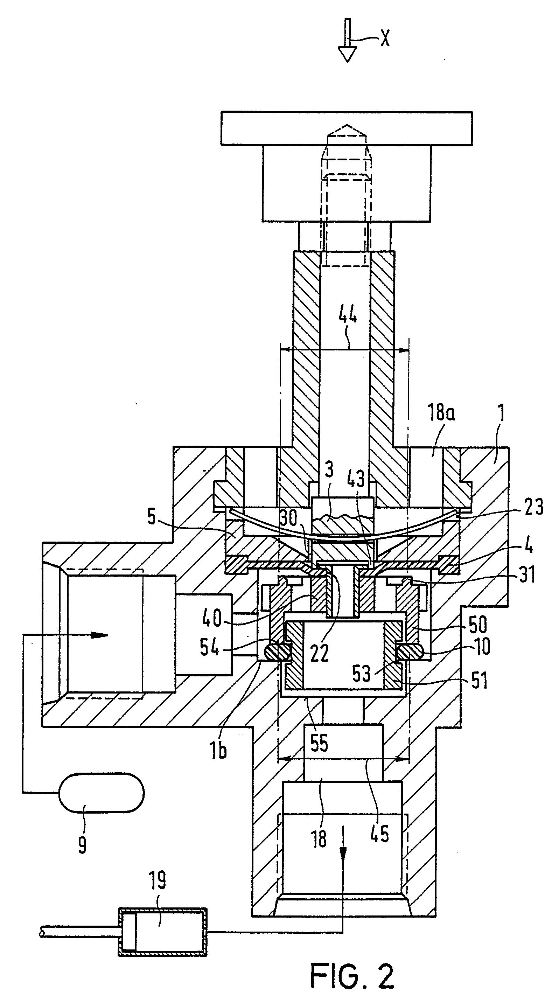

In der in Fig. 1 dargestellt Betriebsstellung des Ventiles ist der Verbraucher 19 mit dem Druckmittelausgang 18a verbunden. In einer anderen, als Belüftungsstellung bezeichneten Betriebsstellung des Ventiles ist der Verbraucher 19 mit der Druckmittelquelle 9 verbunden, siehe Fig. 2.

Der Druck, der im Verbraucher 19 durch Zuführung von Druckmittel aus der Druckmittelquelle 9 maximal erzeugt werden kann, ist der in der Druckmittelquelle 9 tatsächlich herrschende Druck. Welcher Druck sich im Verbraucher 19 als Teildruck des in der Druckmittelquelle 9 herrschenden Druckes tatsächlich einstellt, ist abhängig von einer Kraft, die als Steuersignal zwangsweise auf einen Steuerkolben 3 in Richtung der Längsachse desselben zur Wirkung gebracht wird, beispielsweise mittels eines Elektromagneten oder einer mechanischen Betätigung. Die Längsachsen von Druckmitteleingang 8 und Druckmittelausgang 18 schneiden einander vorzugsweise unter einem Winkel von 90°. Druckmitteleingang 8 und Druckmittelausgang 18 münden in eine Vorratskammer 7, die achsgleich zum Druckmittelausgang 18 im Gehäuse 1 angeordnet von einer Wand 24 umschlossen ist und Teil einer Bohrung ist, die das Gehäuse 1 von einem zum anderen Ende, von beiden Seiten her nach einwärts gestuft, durchdringt. Die Vorratskammer 7 ist an dem dem Druckmittelausgang 18 gegenüberliegenden Ende durch eine Steuermembrane 4 aus einem Elastomer verschlossen, die mit ihrer Außenseite an einem Deckel 5 anliegt, der die Steuermembrane 4 mit ihrem äußeren Rand spiellos in eine Ringnut 23 des Vnetilgehäuses 1 eindrückt. Der Deckel 5 ist mittels geeigneter Mittel in einer solchen Stellung im Gehäuse 1 festgelegt, daß die Steuermembrane 4 spiellos in der Nut 23 gehalten ist. In dem Deckel 5 ist achsgleich zur Vorratskammer 7 eine Bohrung 30 angeordnet. In der Steuermembrane 4 ist ebenfalls achsgleich zu der Vorratskammer 7 eine Bohrung 22 angeordnet.

Der Druckmittelausgang 18 mündet in einer Steuerkammer 7a, die im Gehäuse 1 angeordnet ist und von einer Wand 37 umschlossen wird.

In der Vorratskammer 7 ist ein Ventilglied 2 angeordnet, daß im wesentlichen zylindrisch ist und aus zwei koaxialen Zylinderhülsen 50, 51 gebildet ist, von denen die untere Zylinderhülse 51 teilweise in der oberen Zylinderhülse 50 umfangsgemäß mit geringem Spiel geführt ist, und der elastische Dichtring 10 am außenliegenden Ende des zwischen den beiden Zylinderhülsen 50, 51 bestehenden Umfangsspaltes 52 angeordnet ist. Hierbei umfaßt die obere, den Dichtrand 31 aufweisende Zylinderhülse 50 die untere Zylinderhülse 51. In der Zylinderhülse 51 ist unmittelbar am außen liegenden Ende des Umfangsspaltes 52 eine Umfangsnut 53 ausgebildet, in der der Dichtring 10 teilweise aufgenommen ist. Hierbei ist der Dichtring 10 in der Umfangsnut lose gelagert und die Tiefe der Umfangsnut ist vorzugsweise etwa ein Drittel des Durchmessers des Ringquerschnittes. Der Dichtring 10 ist mit seinem außerhalb der Umfangsnut 53 liegenden Bereich zwischen dem angrenzenden Stirnende 54, der oberen Zylinderhülse 50 und einem in der Gehäusekammer und einem durch eine Durchmesserverringerung der Gehäusekammer gebildeten Bund 1b gelagert. Die untere Zylinderhülse 51 ist mit ihrem sich an den Dichtring anschließenden, dem Ausgang 18 zugekehrten Bereich in den sich an den Bund lb anschließenden Kammerbereich geführt und endet in einem Abstand oberhalb eines Bodens 55 der Gehäusekammer. Wie durch die eingezeichneten Pfeile X erkennbar ist, wird durch die vorstehend beschriebene Ausführungsform und Anordnung der Zylinderhülsen 50, 51 sowie des Dichtringes 10 erreicht, daß der Dichtring von oben und von unten einerseits über den Umfangsspalt 52 und andererseits über den Umfangsspalt 56 zwischen unterer Zylinderhülse 51 und der Innenwandung der Kammer 7 mit dem innerhalb des Innenraumes 35 herrschenden Drucks beaufschlagt, so daß die auftretenden Druckbelastungen vom Innenraum 35 sich gegenseitig, da sie entgegengesetzt auf den Dichtring 10 einwirken, aufheben. Hierdurch wird verhindert, daß der Dichtring bei auftretenden Lastwechseln aus seiner Dichtlage heraus in den Ringspalt zwischen dem Ventilglied und der Wandung der Gehäusekammer 7 gepreßt wird. Der Dichtring liegt dabei mit genau definiertem Durchmesser innerhalb der Gehäusekammer 7. Am äußeren Umfang der oberen Zylinderhülse 50, die an ihrem oberen Ende mit einem Deckel 40 verschlossen ist, sind gleichmäßig auf dem Umfang verteilt Nasen 39 ausgebildet, mit denen das Ventilglied zwar radial spiellos, aber axial verstellbar in der zylindrischen Vorratskammer 7 geführt ist. Der Deckel 40 weist nahe seinem Außenrand gleichmäßig über den Umfang verteilt eine Anzahl Axialbohrungen 34 sowie zentral eine weitere Axialbohrung 34a auf.

In der in Fig. 1 gezeigten Betriebsstellung des erfindungsgemäßen Ventiles liegt das Ventilglied 50 mit seinem oberen Rand 31 als Dichtkante an der Unterseite der Steuermembrane 4 und seinem unteren Stirnende 54 am Dichtring 10 an. Damit ist der Vorratsraum 7 von der Steuerkammer 7a abgesperrt. Andererseits steht der Druckmittelausgang 18 mit dem Innenraum 35 des Ventilgliedes 2 in Verbindung, der über die Axialbohrungen 34, die zentrische Bohrung 34a, die Bohrung 22 der Steuermembrane 4 und den Spalt zwischen dem Steuerkolben 3 und der Bohrung 30 und dem Druckmittelausgang 18a mit der Umgebung des Ventiles in Verbindung steht.

Damit ist die in Fig. 1 dargestellte Betriebsstellung des Ventiles als die Betriebsstellung ausgewiesen, in der der Verbraucher 19 entlüftet ist. Im Verbraucher 19 eingeschlossenes Fluid kann über das Ventil aus dem Verbraucher 19 entweichen. Die Druckmittelquelle 9 ist vom Verbraucher 19 getrennt.

Soll der Verbraucher 19 belüftet werden, so ist er stattdessen mit der Druckmittelquelle 9 zu verbinden. Um das Ventil in die entsprechende Betriebsstellung zu bringen, wird auf den Steuerkolben 3 eine gegen das Ventil gerichtete Steuerkraft (Pfeil X, Fig. 2) aufgebracht, deren Größe entsprechend dem im Verbraucher 19 gewünschten Druck gewählt wird. Diese Steuerkraft verstellt den Steuerkolben 3 in das Ventil hinein, bis er mit seinem inneren Rand 43 als Dichtkante auf dem inneren, freien Randbereich der Steuermembrane 4 zunächst zur Anlage kommt und diesen beim weiteren Verstellen nach innen verformt. Bei der weiteren Verstellbewegung des Steuerkolbens wird das zunächst vorliegende Axialspiel zwischen Steuermembrane und innerem Bund des Deckels 40 überwunden und bei der noch weiteren Verstellbewegung des Steuerkolbens 3 wird das Ventilglied 2 nach innen verstellt, so daß es sich mit seinem Rand 31 von der Steuermembrane 4 löst. Das Auftreffen des Steuerkolbens 3 auf der Steuermembrane 4 beendet den Entlüftungszustand, indem der Ringspalt zwischen Steuerkolben 3 und Rand der Bohrung 30 gesperrt wird. Beim Abheben des Ventilgliedes 2 von der Steuermembrane 4 wird ein Ringspalt freigegeben, der damit den Fluideinlaß 8 durch die Bohrungen 34 mit dem Innenraum 35 des Ventilgliedes 2 und damit mit dem Druckmittelausgang 18 verbindet. Die so gegebene Fluidströmung ist durch die Pfeile in Fig. 2 dargestellt, sie weist diese Betriebsstellung des erfindungsgemäßen Ventiles als die Belüftungsstellung für den Verbraucher 19 aus.

Ist im Innenraum 35 des Ventilgliedes 2 ein Druck erreicht, der der auf den Steuerkolben 3 aufgebrachten Steuerkraft entspricht und wird noch weiter Druckfluid zugeführt, so stellt sich unmittelbar der Zustand ein, in dem der Ventilgliedraum 35 von der Vorratskammer 7 getrennt wird, es herrscht ein Gleichgewichtszustand, der Verbraucher ist sowohl vom Auslaß zwischen Steuerkolben 3 und Bohrungswand 30 als auch von der Zuführung 8 abgesperrt.

Zum Entlüften des Verbrauchers 19 wird die Steuerkraft auf den Steuerkolben 3 verringert, dieser bewegt sich unter dem Druck im Ventilgliedinnenraum 35 nach außen, der Innenrand der Steuermembrane folgt und kehrt in die in Fig. 1 dargestellte Kontur zurück und, wenn sich der Steuerkolben weiter nach außen bewegt, hebt dieser von der Steuermembrane ab und es entweicht Druckfluid bis der Gleichgewichtszustand erneut erreicht ist.

Erfindungsgemäß soll der Durchmesser 44 des als Ventilsitz wirkenden Randes 31 des Ventilgliedes 2 gleich dem Durchmesser 45 der Linie des Zusammenwirkens zwischen Dichtring 10 und oberer Zylinderhülse des Ventilgliedes 2 sein.

Sind die Durchmesser 44 und 45 erfindungsgemäß gleich groß, so wird das Ventilglied 2 bei Gleichgewichtszustand zwischen dem Druck innerhalb und außerhalb des Ventilgliedes von der Vorspannung des Ringes 10 mit seinem Rand 31 an der Steuermembrane 4 in Anlage gehalten.

**Ansprüche**

1. Kraftgesteuertes Druckregelventil, bestehend aus einem Gehäuse mit mindestens einer Druckmitteleingangsöffnung, einer Druckmittelausgangsöffnung und einer Entlastungsöffnung sowie mit einer ständig mit der Druckmitteleingangsöffnung verbundenen, gegen die Druckmittelausgangsöffnung absperrbaren Gehäusekammer, in der ein als Hohlzylinder ausgebildetes Ventilglied axial verstellbar, radial spielarm geführt ist, dessen einer Rand eine mit der Druckmittelausgangsöffnung verbundene Öffnung umgibt und dessen anderer Rand mit einem achsgleich zur Entlastungsöffnung angeordneten Ventilsitz zusammenwirkt und einen zweiten Ventilsitz in einem Deckel des Ventilgliedes umgibt, mit dem ein die Verstellkraft auf das Ventilglied aufbringendes, innerhalb der Entlastungsöffnung angeordnetes Stellglied mit einer ringförmigen Kante zusammenwirkt und dieser Stellkraft eine von einem elastischen, die Gehäusekammer gegen die Druckmittelausgangsöffnung absperrenden, das Ventilglied umfassenden Dichtring erzeugte Rückstellkraft entgegenwirkt,
**dadurch gekennzeichnet,** daß der das Ventilglied (2) bildende Hohlzylinder derart unterteilt ist, daß eine beidseitige Druckbeaufschlagung des Dichtringes vom Innenraum des Ventilgliedes (2) gegeben ist.

2. Kraftgesteuertes Druckregelventil nach Anspruch 1, **dadurch gekennzeichnet,** daß das hohlzylindrische Ventilglied (2) von zwei koaxialen Zylinderhülsen (50, 51) gebildet ist, von denen eine Zylinderhülse (51) teilweise in der anderen Zylinderhülse (50) umfangsgemäß mit geringem Spiel geführt ist, und der elastische Dichtring (10) am außenliegenden Ende eines zwischen den beiden Zylinderhülsen (50, 51) bestehenden Umfangsspaltes (52) angeordnet ist.

3. Kraftgesteuertes Druckregelventil nach Anspruch 2, **dadurch gekennzeichnet,** daß die den Dichtrand (31) aufweisende obere Zylinderhülse (50) die andere untere Zylinderhülse (51) umfaßt, und in der letzteren unmittelbar am außen liegenden Ende des Umfangsspaltes (52) eine Umfangsnut (53) ausgebildet ist, in der der Dichtring (10) teilweise aufgenommen ist.

4. Kraftgesteuertes Druckregelventil nach Anspruch 3, **dadurch gekennzeichnet,** daß der Dichtring (10) in der Umfangsnut (53) lose oder mit Vorspannung gelagert ist.

5. Kraftgesteuertes Druckregelventil nach Anspruch 3 oder 4, **dadurch gekennzeichnet,** daß die Tiefe der Umfangsnut (53) etwa einem Drittel des Durchmessers des Querschnitts des Dichtrings (10) entspricht.

6. Kraftgesteuertes Druckregelventil nach einem oder mehreren der Ansprüche 3 bis 5, **dadurch gekennzeichnet,** daß der Dichtring (10) mit seinem außerhalb der Umfangsnut (53) liegenden Bereich zwischen dem angren zenden Stirnende (54) der äußeren Zylinderhülse (50) und einem in der Gehäusekammer (7) durch eine Durchmesserverringerung der Gehäusekammer gebildeten Bund (1b) gelagert ist.

7. Kraftgesteuertes Druckregelventil nach Anspruch 6, **dadurch gekennzeichnet,** daß die untere, innere Zylinderhülse (51) mit ihrem sich an den Dichtring (10) anschließenden, dem Ausgang (18) zugekehrten Bereich im sich an den Bund (1b) anschließenden Kammerbereich geführt ist, und in einem Abstand oberhalb eines Bodens (55) der Gehäusekammer (7) endet.

FIG. 1

FIG. 2